# EUROPÄISCHE PATENTSCHRIFT

(11) **EP 0 620 397 B1**
(45) Veröffentlichungstag und Bekanntmachung des Hinweises auf die Patenterteilung: **28.02.1996**
(21) Anmeldenummer: 94810202.5
(22) Anmeldetag: 11.04.1994
(51) Int. Cl.: F16L 55/033, F16L 3/16, F16B 5/02

(54) **Tragvorrichtung**
Supporting device
Dispositif de support

(30) Priorität: 15.04.1993 DE 4312327
(43) Veröffentlichungstag der Anmeldung: 19.10.1994
(73) Patentinhaber: HILTI Aktiengesellschaft, FL-9494 Schaan (LI)
(72) Erfinder: Forster, Hubert, D-82272 Moorenweis (DE)
(74) Vertreter: Wildi, Roland

(56) Entgegenhaltungen:
- EP-A- 0 508 085
- DE-A- 1 942 009
- DE-A- 3 236 456
- GB-A- 1 119 127

## Beschreibung

Die Erfindung betrifft eine Tragvorrichtung gemäss dem gattungsbildenden Oberbegriff des Patentanspruches 1.

Bei Bauteilen wie Rohrleitungen und dgl., deren Lage sich aufgrund äusserer Einflüsse - wie beispielsweise Temperaturschwankungen - verändert, besteht bei der Befestigung an Wänden, Decken, Böden und dgl. die Problematik, dass auch der Befestigungspunkt diesen Lageänderungen Rechnung tragen muss. Erschwerend kommt hinzu, dass solche Lageänderungen nicht nur in einer Richtung auftreten, sondem in verschiedenen Richtungen. So treten beispielsweise bei Rohrleitungen im Bereich von Krümmungen Lageänderungen sowohl in Längserstreckung der Rohrleitung als auch in Querrichtung zur Längserstreckung auf.

Zur Befestigung von Rohrleitungen ist beispielsweise aus der DE-PS 32 36 456 eine Tragvorrichtung bekannt, welche in der Lage ist, Lageänderungen der Rohrleitung sowohl in Längserstreckung als auch quer zur Längserstreckung aufzunehmen. Diese bekannte Tragvorrichtung ist mit einer an einem Bauteil festlegbaren Bodenplatte versehen, auf welcher ein Gleitelement begrenzt verschiebbar angeordnet ist. Eine Rohrleitung wird von einem Lastangriffsteil getragen, welches mit dem Gleitelement verbunden ist. Zur Begrenzung der Verschiebbarkeit des Gleitelementes weist die Bodenplatte seitlich hochgezogene Ränder auf.

Der Nachteil dieser bekannten Tragvorrichtung besteht darin, dass sie nur in horizontaler Richtung an Böden angeordnet sein kann, so dass das Lastangriffsteil vertikal nach oben gerichtet ist.

Aus der EP-A-0 508 085, die den nächstkommenden Stand der Technik bildet, ist eine schallgedämpfte Tragvorrichtung für Rohre bekannt, welche einen Gehäusetopf aufweist, der durch einen Deckel abgedeckt ist. Der Deckel ist mit einer Öffnung ausgestattet, durch die sich eine Tragstange berührungsfrei hindurcherstreckt. Die Tragstange ist mit einer Dämpfplatte verbunden, die innerhalb des Gehäusetopfes angeordnet ist. Der Gehäusetopf ist dicht mit Gummikugeln gefüllt, welche die Dämpfplatte und den im Gehäuse befindlichen Endabschnitt der Tragstange vollständig umgeben und abstützen. Durch die Einbettung in die Gummikugeln sollen die Dämpfplatte und die Tragstange sicher ausser Eingriff mit dem Gehäusetopf bzw. dem Deckel gehalten werden, so dass insbesondere Schallschwingungen, die vom Rohr auf die Rohrschelle übertragen werden, nicht auf den Gehäusetopf bzw. den Deckel und damit nicht auf eine Gebäudewand übertragen werden können. Durch die Einbettung der Dämpfplatte in die Gummikugeln kann diese jedoch nur geringfügig in der Ebene verschoben werden. Aufgrund der Höhe des Hohlraumes zwischen dem Deckel und dem Gehäusetopf kann es dazu kommen, dass bei einer Lageänderung des befestigten Rohres die Dämpfplatte innerhalb des Gehäusetopfes kippt oder gar abtaucht. Abgesehen davon, dass dabei die Dämpfplatte bzw. die Tragstange in Eingriff mit dem Gehäusetopf bzw. mit dem Deckel kommen kann, wird dadurch die gesamte Rohrbefestigung derart instabil, dass es zu Beschädigungen des Rohrleitungssystemes kommen kann.

Der Erfindung liegt die Aufgabe zugrunde, eine Tragvorrichtung zu schaffen, die eine lageunabhängige Montage von Bauteilen wie Rohrleitungen und dgl. ermöglicht, wobei die Tragvorrichtung in der Lage ist, sämtliche in einer Ebene auftretenden Lageänderungen der Bauteile aufzunehmen.

Erfindungsgemäss wird dies dadurch erreicht, dass die Deckplatte gegenüber der Bodenplatte derart beabstandet angeordnet ist dass sich zwischen Bodenplatte und Deckplatte ein Hohlraum bildet, dessen Höhe wenigstens im Verschiebbereich im wesentlichen der Stärke des Gleitelementes entspricht, so dass ein Verschieben des Gleitelementes zwischen der Bodenplatte und der Deckplatte in allen kichtungen möglich ist. Eine Oeffnung in der Deckplatte, deren grösste lichte Weite kleiner ist, als die kleinste Flächenerstreckung des Gleitelementes, sichert das Gleitelement in jeder Lage und verhindert eine Verschmutzung des restlichen Hohlraumes zwischen Bodenplatte und Deckplatte. Allfällig auftretender Schmutz lagert sich somit unschädlich im Umfangsbereich des Lastangriffsteiles in der vom Gleitelement und der Oeffnung der Deckplatte gebildeten Vertiefung ab.

Die Verschiebung des Gleitelementes kann beispielsweise durch die lichte Weite der Oeffnung in der Deckplatte begrenzt werden, wenn das Lastangriffsteil mit der Begrenzung der in der Deckplatte angeordneten Oeffnung in Berührung kommt. Vorzugsweise entspricht die lichte Weite der Oeffnung etwa dem 2- bis 6-fachen der die Oeffnung durchsetzenden, grössten Aussenkontur des Lastangriffsteiles.

Um eine grosse Versetzbarkeit eines Gleitelementes mit kleiner Flächenerstreckung erreichen zu können, ist zweckmässigerweise neben einer ersten mit der Bodenplatte fest verbundenen Deckplatte wenigstens eine weitere Deckplatte angeordnet, die sich an der ersten Deckplatte abstützt und gegenüber dieser verschiebbar ist. Diese weitere Deckplatte ist somit zwischen dem Gleitelement und der ersten Deckplatte angeordnet und weist ebenfalls eine Oeffnung auf, die dem Durchsetzen des Lastangriffsteiles dient.

Um eine sichere Halterung des Gleitelementes und der weiteren Deckplatte in dem Hohlraum zwischen der Bodenplatte und der ersten Deckplatte erreichen zu können, ist die Tragvorrichtung vorteilhafterweise derart ausgebildet, dass die lichte Weite der Oeffnung der weiteren Deckplatte kleiner ist als die parallel zur Ebene der Bodenplatte verlaufende Flächenerstreckung des Gleitelementes und dass die Aussenkontur der weiteren Deckplatte die lichte Weite der Oeffnung der ersten Deckplatte übersteigt.

Zur Aufnahme der Lageänderungen in allen Richtungen weisen vorzugsweise Bodenplatte, Gleitelement, Deckplatte und weitere Deckplatte eine kreis- bzw. kreisring-förmige Ausbildung auf. Dabei handelt es sich beispielsweise im einzelnen bei der Bodenplatte und beim Gleitelement um Scheiben, während die mit der Bodenplatte verbundene Deckplatte sowie die oder auch mehrere weitere Deckplatten als Kreisringe ausgebildet sein können.

Die Erfindung wird anhand von Zeichnungen, die ein Ausführungsbeispiel wiedergeben, näher erläutert. Es zeigen:
- Fig. 1: eine erfindungsgemässe Tragvorrichtung mit Schellenkörper und Rohr, teilweise geschnitten;
- Fig. 2: einen Schnitt der Fig. 1 entlang der Linie II-II.

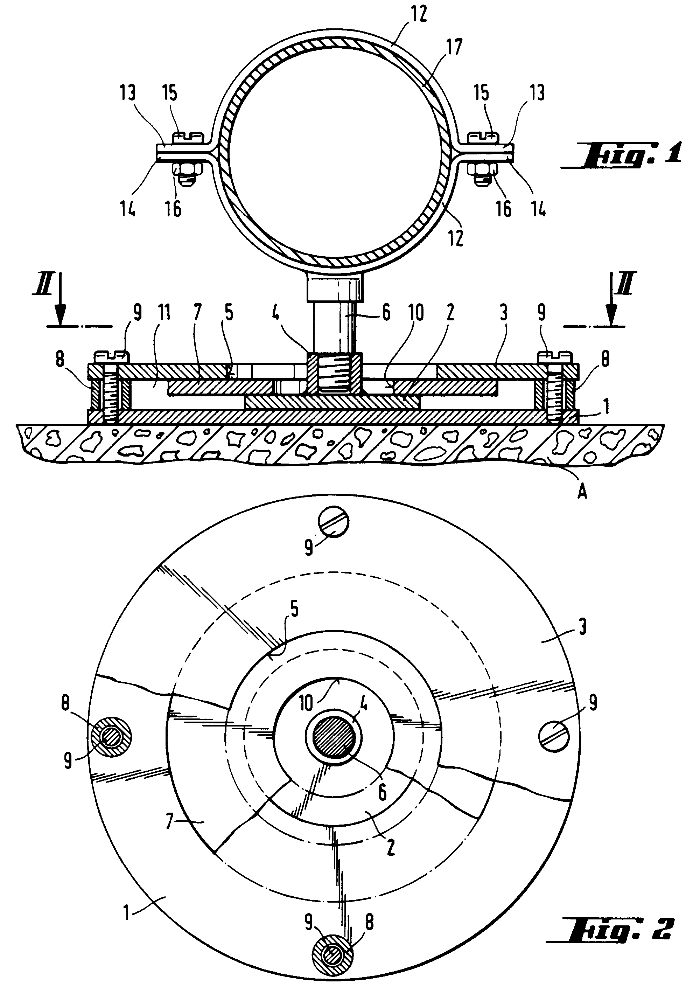

Die in den Fig. 1 und 2 dargestellte Tragvorrichtung besteht aus einer Bodenplatte 1, einem parallel zur Ebene der Bodenplatte 1 begrenzt verschiebbaren Gleitelement 2, das ein Lastangriffsteil 4 aufweist, einer ersten mit der Bodenplatte 1 fest verbundenen Deckplatte 3 sowie einer weiteren Deckplatte 7, die sich an der ersten Deckplatte 3 abstützt und gegenüber dieser verschiebbar ist.

Die Bodenplatte 1 liegt auf einem Bauteil A und ist mit diesem über nicht dargestellte Befestigungselemente fest verbunden. Im Umfangsbereich der Bodenplatte 1 ragen vier Distanzelemente 8 von der Bodenplatte 1 ab, die als Auflager für die erste Deckplatte 3 dienen. Durch entsprechende Durchgangsbohrungen der ersten Deckplatte 3 und durch die Distanzelemente 8 ragen Schrauben 9, die mit entsprechenden Gewinden der Bodenplatte 1 zusammenwirken.

Zwischen der Bodenplatte 1 und der ersten Deckplatte 3 bildet sich ein Hohlraum 11, der ein Verschieben des Gleitelementes 2 und der weiteren Deckplatte 7 parallel zur Ebene der Bodenplatte 1 ermöglicht. Das Gleitelement 2 und die weitere Deckplatte 7 sind kreisringförmig ausgebildet. Die Höhe des Hohlraumes 11 entspricht im wesentlichen der Stärke des Gleitelementes 2 und der weiteren Deckplatte 7.

Das an dem Gleitelement 2 angeordnete Lastangriffsteil 4 ragt vom Gleitelement 2 ab und durchsetzt kreisrund ausgebildete Oeffnungen 5, 10 der ersten Deckplatte 3 und der weiteren Deckplatte 7. Die Oeffnung 5 der ersten Deckplatte 3 weist einen Durchmesser auf, der einerseits kleiner ist als der Aussendurchmesser der weiteren Deckplatte 7, andererseits grösser ist als der Aussendurchmesser des Gleitelementes 2. Die Oeffnung 10 der weiteren Deckplatte 7 ist derart gross ausgebildet, dass sie dem 2- bis 6-fachen der die Oeffnung 10 durchsetzenden grössten Aussenkontur des Lastangriffsteiles 4 entspricht.

Das Lastangriffsteil 4 besitzt ein zentral angeordnetes Innengewinde, in das ein komplementär ausgebildetes Aussengewinde eines Zwischenkörpers 6 ragt. Der Zwischenkörper 6 trägt einen Schellenkörper 12, der aus zwei halbkreisförmig ausgebildeten Schalen besteht, deren Enden als Flansch 13, 14 ausgebildet sind, die im wesentlichen parallel zueinander verlaufen. Mittels entsprechender Schrauben 15 und Muttem 16 werden die beiden Schellenhälften zusammengehalten. Der Schellenkörper 12 umgibt eine festzulegende Rohrleitung 17.

## Patentansprüche

1. Tragvorrichtung mit einer Bodenplatte (1) und einer mit dieser verbunden Deckplatte (3), welche eine Öffnung (5) für den ungehinderten Durchtritt eines Lastangriffsteiles (4) aufweist, das mit einem Gleltelement (2) verbunden ist, dessen parallel zur Bodenplatte (1) verlaufende Abmessungen grösser sind als die Abmessungen der Öffnung (5) und welches in einem Hohlraum (11) zwischen der Bodenplatte (1) und der Deckplatte (3) angeordnet ist und parallel zur Bodenplatte (1) begrenzt verschiebbar ist, **dadurch gekennzeichnet,** dass die Höhe des Hohlraumes (11) wenigstens im Verschiebbereich im wesentlichen der Stärke des Gleitelementes (2) entspricht, und dass die Öffnung (5) derart bemessen ist, dass das Gleitelement (2) in allen Richtungen parallel zur Bodenplatte (1) verschiebbar ist.

2. Tragvorrichtung nach Anspruch 1, dadurch gekennzeichnet, dass die lichte Weite der Öffnung (5) etwa dem 2- bis 6-fachen der die Öffnung durchsetzenden grössten Aussenkontur des Lastangriffsteiles (4) entspricht.

3. Tragvorrichtung nach einem der vorangehenden Ansprüche, dadurch gekennzeichnet, dass die Deckplatte mehrteilig ausgebildet ist, und eine mit der Bodenplatte (1) fest verbundene erste Deckplatte (3) sowie wenigstens eine weitere Deckplatte (7) mit einer weiteren Öffnung (10) für das Lastangriffsteil (4) umfasst, welche zwischen der ersten Deckplatte (3) und der Bodenplatte (1) angeordet ist, sich an der ersten Deckplatte (3) abstützt und gegenüber dieser verschiebbar ist.

4. Tragvorrichtung nach Anspruch 4, dadurch gekennzeichnet, dass die lichte Weite der Öffnung (10) in der weiteren Deckplatte (7) kleiner ist als die parallel zur Bodenplatte (1) verlaufenden Abmessungen des Gleitelementes (2), und dass die Aussenkontur der weiteren Deckplatte (7) die lichte Weite der Öffnung (5) der ersten Deckplatte (3) übersteigt.

5. Tragvorrichtung nach einem der vorangehenden Ansprüche, dadurch gekennzeichnet, dass die Bodenplatte (1), das Gleitelement (2), die Deckplatte (3) und gegebenenfalls die weiteren Deckplatten (7) eine kreis- bzw. kreisringförmige Ausbildung besitzen.

## Claims

1. Supporting fixture having a floor plate (1) and joined thereto a cover plate (3) incorporating an opening (5) for the unimpeded passage of a load application member (4) joined to a sliding member (2) whose dimensions parallel to the floor plate (1) are greater than the dimensions of the opening (5) and which is disposed in a cavity (11) between the floor plate (1) and the cover plate (3) and is adapted to be displaced parallel to the floor plate (1) by a limited amount, characterised in that the height of the cavity (11) at least in the area of displacement is substantially the same as the thickness of the sliding element (2), and that the size of the opening (5) is such that the sliding element (2) is adapted to be displaced parallel to the floor plate (1) in every direction.

2. Supporting fixture according to claim 1, characterised in that the inside diameter of the opening (5) is roughly twice to six times the maximum external contour of the load application member (4) passing through the opening.

3. Supporting fixture according to either of the preceding claims, characterised in that the cover plate is a multi-part construction and includes a first cover plate (3) which is permanently joined to the floor plate (1) and at least one additional cover plate (7) having an additional opening (10) for the load application member (4), the said additional opening (10) being disposed between the first cover plate (3) and the floor plate (1), resting on the first cover plate (3) and being adapted to be displaced relative to the latter.

4. Supporting fixture according to claim 3, characterised in that the inside diameter of the opening (10) in the additional cover plate (7) is smaller than the dimensions of the sliding member (2) extending parallel to the floor plate (1), and that the external contour of the additional cover plate (7) exceeds the inside diameter of the opening (5) in the first cover plate (3).

5. Supporting fixture according to any of the preceding claims, characterised in that the floor plate (1), the sliding member (2), the cover plate (3) and if appropriate the additional cover plates (7) are circular or annulus-shaped constructions.

## Revendications

1. Dispositif porteur comprenant une plaque de base (1) et une plaque de couvercle (3) reliée à elle et qui présente une ouverture (5) pour le passage libre d'une partie d'application de charge (4) qui est reliée à un élément de glissement (2) dont les dimensions parallèlement à la plaque de base (1) sont plus grandes que les dimensions de l'ouverture (5) et qui est disposé dans une cavité (11) entre la plaque de base (1) et la plaque de couvercle (3) et est déplaçable de manière limitée parallèlement à la plaque de base (1), caractérisé en ce que la hauteur de la cavité (11), au moins dans la zone de déplacement, correspondant sensiblement à l'épaisseur de l'élément de glissement (2), et que l'ouverture (5) est dimensionnée de telle sorte que l'élément de glissement est déplaçable parallèlement à la plaque de base (1) dans toutes les directions.

2. Dispositif porteur selon la revendications 1, caractérisé en ce que la largeur libre de l'ouverture (5) correspond sensiblement à 2 à 6 fois le plus grand périmètre de la partie d'application de charge (4) traversant l'ouverture.

3. Dispositif porteur selon l'une quelconque des revendications précédentes, caractérisé en ce que la plaque de couvercle est réalisée en plusieurs parties et comprend une première plaque de couvercle (3) solidarisée de la plaque de base (1) et au moins une autre plaque de couvercle (7) avec une autre ouverture (10) pour la partie d'application de charge (4) qui est disposée entre la première plaque de couvercle (3) et la plaque de base (1), s'appuie sur la première plaque de couvercle (3) et est déplaçable par rapport à cette dernière.

4. Dispositif porteur selon la revendication 4, caractérisé en ce que la largeur libre de l'ouverture (10) dans l'autre plaque de couvercle (7) est plus petite que les dimensions de l'élément de glissement (2) parallèlement à la plaque de base (1) et que le périmètre de l'autre plaque de couvercle (7) est supérieur au diamètre libre de l'ouverture (5) de la première plaque de couvercle (3).

5. Dispositif porteur selon l'une des revendications précédentes, caractérisé en ce que la plaque de base (1), l'élément de glissement (2), la plaque de couvercle (3) et, le cas échéant l'autre plaque de couvercle (7) possèdent une forme circulaire et respectivement en couronne.
